# EUROPÄISCHE PATENTSCHRIFT

(11) **EP 3 354 178 B1**
(45) Veröffentlichungstag und Bekanntmachung des Hinweises auf die Patenterteilung: **17.11.2021**
(21) Anmeldenummer: 17153952.1
(22) Anmeldetag: 31.01.2017
(51) Int. Cl.: A47L 5/36

(54) **BODENSTAUBSAUGER**
FLOOR VACUUM CLEANER
ASPIRATEUR

(43) Veröffentlichungstag der Anmeldung: 01.08.2018
(73) Patentinhaber: Eurofilters Holding N.V., 3900 Overpelt (BE)
(72) Erfinder: SAUER, Ralf, 3900 Overpelt (BE); SCHULTINK, Jan, 3900 Overpelt (BE)
(74) Vertreter: Grünecker Patent- und Rechtsanwälte PartG mbB

(56) Entgegenhaltungen:
- EP-A1- 0 488 014
- EP-A2- 2 368 473
- US-A- 2 794 513

## Beschreibung

Die Erfindung betrifft einen Bodenstaubsauger umfassend eine auf Rollen und/oder Gleitkufen gelagerte Staubsammeleinrichtung mit einer Motorgebläseeinheit.

Bei Staubsaugern wurden in den letzten Jahren erhebliche Anstrengungen unternommen, die Saugleistungskonstanz zu verbessern. Bei Beutelstaubsaugern, also Staubsaugern, bei denen der eingesaugte Staub in Filterbeuteln abgeschieden wird, können derartige Verbesserungen durch Modifikationen des Staubsaugerfilterbeutels oder des Staubsaugers als solches erreicht werden.

Bei den Staubsaugerfilterbeuteln wurden beispielsweise die eingesetzten Filtermaterialien und der Aufbau der Beutelwand verändert. Entsprechende Lehren finden sich in der EP 0 960 645, EP 1 960 084, EP 2 263 508 oder der EP 2 366 319.

Im Bereich der Beutelstaubsauger unterscheidet man zwischen verschiedenen Bauformen. Neben Bodenstaubsaugern (Schlittenstaubsaugern) gibt es auch Handstaubsauger, Kesselstaubsauger und Stielsauger (Stick-Staubsauger). Verbesserungen der Saugleistungskonstanz durch Modifizierungen der Beutelstaubsauger beruhen häufig auf Umgestaltungen des Staubsammelraums, in dem der Staubsaugerfilterbeutel im Betrieb angeordnet ist. Entsprechende Vorschläge finden sich beispielsweise in der WO 2010/018086, EP 2 613 682, EP 2 465 399, WO 2010/067053, WO 2010/018089, DE 4014219, EP 2 236 072, EP 2 229 859 oder EP 2 454 982.

In der EP 2 368 473 ist bei einem Motorschutzfilter für Staubsauger vorgesehen, dass ein Filterelement in einem Filterdeckel zum Abdecken eines Filtergehäuses festsetzbar ist.

Weitere Staubsaugeraufbauten sind aus der US 2,794,513 und der EP 0 488 014 bekannt.

Trotz aller Bemühungen ist die Saugleistungskonstanz der bekannten Beutelstaubsauger, insbesondere der Bodenstaubsauger, noch nicht zufriedenstellend. Das Einsaugen von 400 g DMT-8-Staub führt typischerweise immer noch zu einem signifikanten Abfall des gemessenen Volumenstroms um bis zu 30 %.

Angesichts dessen besteht die der Erfindung zugrunde liegende Aufgabe darin, einen Bodenstaubsauger mit verbesserter Saugleistungskonstanz bereit zu stellen. Diese Aufgabe wird durch den Gegenstand von Anspruch 1 gelöst.

Erfindungsgemäß wird ein Bodenstaubsauger bereitgestellt, umfassend eine auf Rollen und/oder Gleitkufen gelagerte Staubsammeleinrichtung mit einer Motorgebläseeinheit,
wobei die Staubsammeleinrichtung ein Gehäuse aufweist, in dem ein Staubraum zur Aufnahme eines Filterbeutels und ein Gebläseraum zur Aufnahme der Motorgebläseeinheit vorgesehen sind,
wobei der Gebläseraum mit der Motorgebläseeinheit neben dem Staubraum angeordnet ist,
wobei der Staubraum und der Gebläseraum durch eine Trennwand voneinander getrennt sind,
wobei der Staubraum über einen Ansaugkanal fluidisch mit dem Gebläseraum verbunden ist,
wobei der Ansaugkanal derart angeordnet ist, dass mittels der Motorgebläseeinheit Luft nach oben aus dem Staubraum durch den Luftkanal in den Gebläseraum saugbar ist.

Es hat sich überraschenderweise herausgestellt, dass ein derart ausgebildeter Bodenstaubsauger eine hervorragende Saugleistungskonstanz aufweist und gleichzeitig handlich bzw. leicht bewegbar ist. Die spezifische Anordnung von Staubraum und Gebläseraum und dem die beiden Räume fluidisch verbindenden Ansaugkanal führt dazu, dass im Saugbetrieb der in den Beutel gesaugte Staub mit dem Saugluftstrom überwiegend eine Bewegung nach oben, entgegengesetzt der Gravitationsrichtung erfährt. Dieser Staub wird dann (zumindest teilweise) an und in dem Bereich der Beutelwand des Staubsaugerfilterbeutels abgeschieden und eingelagert, durch den der Innenraum des Staubsaugerfilterbeutels in im Staubsauger eingesetzten Zustand nach oben hin begrenzt wird. Aufgrund der Gravitation wird nach dem Ausschalten der Motorgebläseeinheit zumindest ein Teil des in diesem Bereich abgeschiedenen Staubes im Beutel nach unten fallen, wodurch die Verstopfungsneigung der Beutelwandung verringert wird.

Da darüber hinaus der Gebläseraum zur Aufnahme der Motorgebläseeinheit neben (und nicht über oder oberhalb) dem Staubraum angeordnet ist, was zu einer niedrigen/tiefen Positionierung der Motorgebläseeinheit führt, weist der Bodenstaubsauger einen niedrigen Schwerpunkt auf und kann daher in stabiler Weise und ohne großen Krafteinsatz bewegt werden. Diese Konfiguration führt außerdem zu einer kompakten Bauweise, sodass der Bodenstaubsauger auch bei beengten Raumverhältnissen ohne Schwierigkeiten eingesetzt werden kann. Der Gebläseraum kann auf im Wesentlichen gleicher Höhe wie der Staubraum angeordnet sein.

Hier und im Folgenden beziehen sich Angaben wie "oben" und "unten" auf eine Anordnung des Bodenstaubsaugers im bestimmungsgemäßen Gebrauch und Saugbetrieb, wenn dieser also auf seinen Rollen bzw. Gleitkufen gelagert ist.

Aufgrund der anspruchsgemäßen Konfiguration mündet der Ansaugkanal auf der Staubraumseite von oben in den Staubraum. Der staubraumseitige Mündungsbereich des Ansaugkanals ist derart angeordnet, dass er im bestimmungsgemäßen Gebrauch über und/oder oberhalb des Staubsaugerfilterbeutels im Staubraum liegt.

Die Trennwand kann plan bzw. gerade oder gekrümmt ausgebildet sein. Sie kann im bestimmungsgemäßen Gebrauch im Wesentlichen lotrecht oder unter einem Winkel zur Lotrichtung angeordnet sein.

Bei dem Bodenstaubsauger ist der Staubraum an seiner oberen Seite durch eine Begrenzungswand (Decke) begrenzt. Diese (obere) Begrenzungswand kann gerade oder gekrümmt ausgebildet sein. An einer solchen Begrenzungswand ist ein Beabstandungsmittel angeordnet, um einen im Staubraum angeordneten Filterbeutel von der Begrenzungswand im Betrieb des Bodenstaubsaugers beabstandet zu halten.

Mit einem derartigen Beabstandungsmittel kann in vorteilhafter Weise sichergestellt werden, dass auch im Saugbetrieb die Luft nach oben aus dem Staubraum durch den Ansaugkanal in den Gebläseraum gesaugt wird; ein Anlegen eines Teils der Beutelwandung an der (oberen) Begrenzungswand, was zu einem Verstopfen oder Blockieren des Ansaugkanals führen würde, wird vermieden.

Das Beabstandungsmittel ist in Form von Rippen und/oder eines Gitters ausgebildet. Die Rippen bzw. das Gitter können an der oberen Begrenzungswand (Decke) des Staubraums befestigt sein. Die Rippen können stabförmig oder flächig ausgebildet sein.

Der Ansaugkanal kann zumindest teilweise durch die (obere) Begrenzungswand begrenzt sein. Der Ansaugkanal kann zumindest teilweise, speziell sein im Saugraum befindlicher Teil, entlang der oberen Begrenzungswand verlaufen.

Zwischen der Begrenzungswand und der Trennwand kann eine Öffnung gebildet sein, durch die der Ansaugkanal führt. Damit sind der Staubraum und die Trennwand derart ausgestaltet, dass (beim bestimmungsgemäßen Gebrauch) Luft aus dem Staubraum über die Trennwand hinweg in den Gebläseraum und in die Motorgebläseeinheit gesaugt wird. Bei dieser Ausgestaltung stellt der Luftweg über die Trennwand hinweg die kürzeste fluidische Verbindung zwischen Staubraum und Gebläseraum/Motorgebläseeinheit dar; es gibt keine weitere direkte oder kürzere Verbindung (beispielsweise durch eine Öffnung in der Mitte der Trennwand, wie sie typischerweise bei herkömmlichen Bodenstaubsauger vorgesehen ist).

Statt einer zwischen der Trennwand und der Begrenzungswand gebildeten Öffnung kann alternativ die Trennwand in ihrem oberen Bereich eine Öffnung aufweisen, durch die der Ansaugkanal vom Staubraum in den Gebläseraum führt. Eine derartige Öffnung in der Trennwand ist möglich, solange sichergestellt ist, dass der Ansaugkanal dergestalt ausgebildet ist, dass ein Ansaugen der Luft nach oben im Staubraum gewährleistet ist. Bei dieser Alternative kann die Trennwand auch bis zur Begrenzungswand durchgehend ausgeführt sein, also direkt an die Begrenzungswand (ohne dazwischen befindliche Öffnung) anstoßen.

Der Staubraum kann quer zur Trennwand durch einander gegenüberliegende Seitenwände begrenzt sein, wobei sich der Ansaugkanal zumindest teilweise entlang einer oder beider Seitenwände erstreckt. Die gegenüberliegenden Seitenwände grenzen bei dieser Konfiguration an die Trennwand an; nach oben hin grenzen die Seitenwände an die (obere) Begrenzungswand/Decke an. Durch eine solche Ausgestaltung wird der Mündungsbereich des Ansaugkanals zu einer oder beiden Seitenwänden hin erweitert; er ist damit nicht mehr auf die Begrenzungswand beschränkt. Dies führt zu einer Vergrößerung der Beutelwandungsfläche, durch die der den Staub mitführende Luftstrom aus dem Staubsaugerfilterbeutel gesaugt wird. Damit vergrößert sich auch der Bereich der Beutelwandung bzw. deren Filtermaterials, wo Staub abgeschieden und eingelagert wird, was zu einer weiteren Reduzierung der Verstopfungsneigung und somit einer länger gleichbleibenden Saugleistungskonstanz führt.

Alternativ oder zusätzlich kann der Staubsammelraum durch eine der Trennwand gegenüberliegende Stirnwand begrenzt sein, wobei sich der Ansaugkanal zumindest teilweise entlang der Stirnwand erstreckt. Die zuvor genannten gegenüberliegenden Seitenwände grenzen dann auf einer Seite an die Trennwand und auf der jeweils anderen Seite an die Stirnwand.

Die Stirnwand kann dabei zumindest teilweise parallel zur Trennwand angeordnet sein. Sie kann allerdings auch bezüglich der Trennwand geneigt sein. Die Stirnwand selbst kann insbesondere plan bzw. gerade oder gekrümmt ausgebildet sein. Sie kann im bestimmungsgemäßen Gebrauch des Bodenstaubsaugers zumindest teilweise im Wesentlichen lotrecht oder unter einem Winkel zur Lotrichtung angeordnet sein. Die Stirnwand kann an ihrer oberen Seite an die Begrenzungswand/Decke angrenzen.

Durch die Erstreckung des Ansaugkanals, insbesondere seines Mündungsbereichs, zumindest teilweise entlang der Stirnwand wird die Abscheidefläche des Filtermaterials der Beutelwandung weiter vergrößert, was zu einer zusätzlichen Verringerung der Verstopfungsneigung führt.

Alternativ kann der Ansaugkanal derart angeordnet sein, dass mittels der Motorgebläseeinheit Luft ausschließlich nach oben aus dem Staubraum durch den Ansaugkanal in den Gebläseraum saugbar ist. Bei dieser Ausgestaltung ist demnach der Ansaugkanal zu den Seitenwänden und/oder der Stirnwand hin begrenzt bzw. abgeschottet; der Mündungsbereich des Ansaugkanals ist daher auf die Begrenzungswand/Decke beschränkt, befindet sich also im Betrieb ausschließlich oberhalb des Staubsaugerfilterbeutels. Diese Konfiguration führt zu einem höheren Volumenstrom im Ansaugkanal, wobei gleichzeitig ein großer Teil des Staubraums für den Staubsaugerfilterbeutel zur Verfügung steht.

Bei den zuvor beschriebenen Bodenstaubsaugern können an einer oder beiden der Seitenwände, an der Trennwand und/oder an der Stirnwand Beabstandungsmittel angeordnet sein, um einen im Staubraum angeordneten Filterbeutel von der entsprechenden Seitenwand, Trennwand bzw. Stirnwand beabstandet zu halten. Auf diese Weise wird auch im Saugbetrieb sichergestellt, dass die Saugluft durch den entsprechenden Bereich der Beutelwandung hindurchtreten kann und Staub an dieser Oberfläche an der Innenseite des Staubsaugerfilterbeutels abgeschieden wird.

Die Motorgebläseeinheit kann derart angeordnet sein, dass über den Ansaugkanal angesaugte Luft von oben in die Motorgebläseeinheit eintritt. Damit wird eine unnötige Umlenkung der angesaugten Luft vermieden, wodurch auch bei niedrigen Motorleistungen ein hoher Volumenstrom erzielt werden kann. Dabei kann der Ansaugkanal von oben in den Gebläseraum münden; die gebläseraumseitige Mündung ist oberhalb des Gebläseraums angeordnet.

Der Staubraum kann an seiner oberen Seite durch eine Begrenzungswand begrenzt sein, die zumindest teilweise als ein öffen- und verschließbarer, insbesondere verschwenkbarer, Deckel ausgebildet ist. Damit sind dann (zumindest teilweise) auch der Ansaugkanal sowie dessen Mündungsbereich im Bereich des Deckels des Staubsaugers ausgebildet. Insbesondere können dann auch die oben beschriebenen Merkmale bezüglich der Begrenzungswand, beispielsweise das dort vorgesehene Beabstandungsmittel, am Deckel verwirklicht sein. Bei dieser Ausgestaltung wird also Luft aus dem Staubraum in Richtung des Deckels gesaugt und durch den Ansaugkanal, der zumindest teilweise am Deckel entlang führt, in den Gebläseraum geleitet.

Bei den zuvor beschriebenen Staubsaugern kann der Staubraum an seiner oberen Seite durch eine Begrenzungswand begrenzt sein, in der eine Eintrittsöffnung für einen einzusaugenden Luftstrom vorgesehen ist. Alternativ kann der Staubraum durch eine der Trennwand gegenüberliegende Stirnwand begrenzt sein, in der eine Eintrittsöffnung für einen einzusaugenden Luftstrom vorgesehen ist. Durch diese Eintrittsöffnung, an der der Ansaugstutzen des Staubsaugers angeordnet ist, tritt die eingesaugte Luft in den Staubraum ein. Sie wird dann durch den Ansaugstutzen in einen im Staubraum angeordneten Staubsaugerfilterbeutel geleitet; in diesem wird der eingesaugte Staub abgeschieden. Die (obere) Begrenzungswand oder die der Trennwand gegenüberliegende Stirnwand können (zumindest teilweise) als ein öffen- und verschließbarer, insbesondere verschwenkbarer, Deckel ausgebildet sein. Damit ist die Eintrittsöffnung - und ein gegebenenfalls an der Eintrittsöffnung vorgesehener Anschlussstutzen, der ins Innere des Staubraums ragt, - im Deckel des Bodenstaubsaugers, speziell des Staubraums, angeordnet.

Die zuvor beschriebenen Bodenstaubsauger können einen Saugschlauch, ein Saugrohr und eine Bodendüse umfassen, wobei mittels der Motorgebläseeinheit Luft durch die Bodendüse, das Saugrohr und den Saugschlauch in den Staubraum saugbar ist. Der Eintritt der Luft in den Staubraum kann durch einen in den Staubraum ragenden Anschlussstutzen erfolgen. Ein derartiger Anschlussstutzen ragt bzw. taucht in eine Halteplatte des Staubsaugerfilterbeutels und/oder das Innere des Staubsaugerfilterbeutels selbst ein.

Der Bodenstaubsauger kann weiterhin eine im Staubraum angeordnete Halterung zur Halterung eines Filterbeutels umfassen. Die Halterung kann insbesondere zur Aufnahme und Halterung einer Halteplatte eines Staubsaugerfilterbeutels ausgebildet sein.

Der Staubsaugerfilterbeutel kann ein Flachbeutel sein oder eine Klotzbodenform aufweisen. Ein Flachbeutel wird durch zwei Seitenwände aus Filtermaterial gebildet, die entlang ihrer Umfangsränder miteinander verbunden (beispielsweise verschweißt oder verklebt) sind. In einer der beiden Seitenwände kann die Beutelfüllöffnung bzw. Eintrittsöffnung vorgesehen sein. Die Seitenflächen bzw. -wände können jeweils eine rechteckige Grundform aufweisen. Jede Seitenwand kann eine oder mehrere Lagen Vlies und/oder Vliesstoff umfassen.

Der Ansaugkanal wird typischerweise auf einer Seite durch die obere Begrenzungswand des Staubraums bzw. den Deckel begrenzt. In Richtung der den Staubraum begrenzenden Seitenwände kann der Ansaugkanal offen oder geschlossen ausgebildet sein. In Richtung einer der Trennwand gegenüberliegenden Stirnwand, die ebenfalls den Staubraum begrenzt, kann der Ansaugkanal offen oder geschlossen ausgebildet sein. In Richtung des Staubraums wird der Ansaugkanal insbesondere durch ein Beabstandungsmittel definiert oder begrenzt. Auf diese Weise wird die staubraumseitige Mündung des Ansaugkanals definiert oder gebildet.

Die beschriebenen Bodenstaubsauger können weiterhin einen an der gebläseraumseitigen Mündung des Ansaugkanals angeordneten Motorschutzfilter umfassen. Dieser Motorschutzfilter verhindert, dass möglicherweise aus dem Beutel austretende Partikel in die Motorgebläseeinheit gesaugt werden und diese beschädigen.

Die Motorgebläseeinheit kann ein, insbesondere einstufiges, Axialgebläse aufweisen. Bei einem Axialgebläse wird die Luft parallel oder axial zur Antriebsachse des Gebläserads angesaugt und parallel oder axial zur Antriebsachse ausgeblasen.

Die Drehachse des Axialgebläses kann im Betrieb des Bodenstaubsaugers lotrecht oder mit einem Winkel von höchstens 60°, insbesondere von höchstens 45°, zur Lotrichtung ausgerichtet sein. Dies ermöglicht eine vorteilhafte Ansaugung des Luftstroms durch den Ansaugkanal.

Weitere Merkmale und Vorteile werden anhand der Figuren beschrieben. Dabei zeigt
- Figur 1: eine schematische Querschnittsansicht eines Bodenstaubsaugers;
- Figur 2: eine schematische Innenansicht eines Bodenstaubsaugers;
- Figur 3: eine schematische Draufsicht auf die Innenseite eines Deckels eines Bodenstaubsaugers;
- Figur 4: schematisch eine Draufsicht auf die Innenseite eines weiteren Deckels eines Bodenstaubsaugers;
- Figur 5: eine schematische Querschnittsansicht eines Vergleichsbodenstaubsaugers.

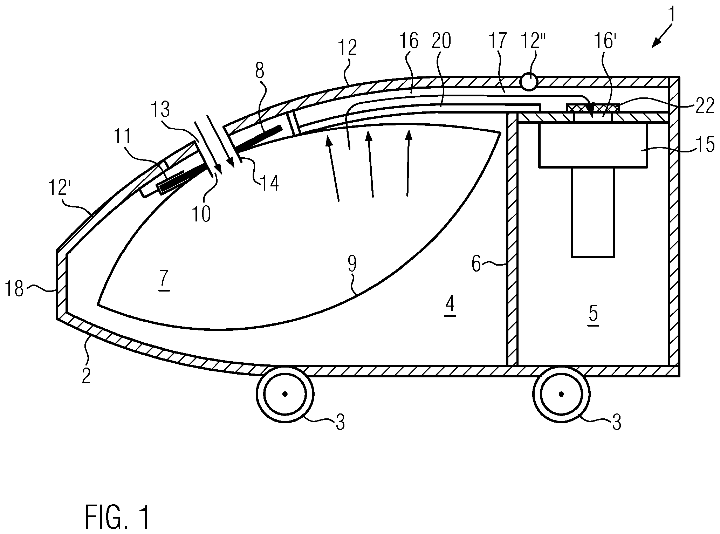

Figur 1 zeigt schematisch einen Bodenstaubsauger 1 mit einer Staubsammeleinrichtung 2, die in dem gezeigten Beispiel auf Rollen 3 gelagert ist.

Im Gehäuse der Staubsammeleinrichtung 2 sind ein Staubraum 3 und ein Gebläseraum 4 vorgesehen. Der Staubraum 4 und der Gebläseraum 5 sind nebeneinander angeordnet und durch eine Trennwand 6 voneinander getrennt. Der Gebläseraum 5 liegt auf gleicher Höhe wie der Staubraum 4, ist also insbesondere nicht über dem Staubraum angeordnet. Damit werden ein niedriger Schwerpunkt und eine kompakte Bauweise ermöglicht.

In dem Staubraum 4 ist ein Staubsaugerfilterbeutel 7 vorgesehen, bei dem es sich im gezeigten Beispiel um einen Flachbeutel handelt. Der Staubsaugerfilterbeutel 7 umfasst eine Beutelwandung 9 aus einem ein- oder mehrlagigen Filtermaterial. Bei den einen oder mehreren Lagen an Filtermaterial kann es sich insbesondere jeweils um ein Vlies und/oder einen Vliesstoff handeln. An der Beutelwandung 9 ist eine Halteplatte 8 befestigt, beispielsweise mit dem Filtermaterial verschweißt. Die Halteplatte 8 ist an der Beutelfüllöffnung bzw. Eintrittsöffnung 10 des Staubsaugerfilterbeutels angeordnet und weist selbst eine Durchtrittsöffnung auf.

Die Halteplatte 8 wird von einer Halterung 11 aufgenommen, durch die der Staubsaugerfilterbeutel 7 im Staubraum 4 gehaltert wird.

Der Staubraum 4 wird an seiner oberen Seite durch eine (obere) Begrenzungswand begrenzt, die im vorliegenden Beispiel zweiteilig ausgebildet ist. Sie umfasst einen Deckel 12, der um ein Scharnier 12" verschwenkbar ist. Auf diese Weise kann der Staubraum 4 geöffnet werden, um einen Staubsaugerfilterbeutel einzusetzen oder herauszunehmen. Die Begrenzungswand weist weiterhin einen festen Abschnitt 12' auf, der an eine Stirnwand 18 angrenzt.

Im Deckel 12 ist eine Eintrittsöffnung 13 für einen einzusaugenden Luftstrom vorgesehen. An der Eintrittsöffnung 13 ist ein Ansaugstutzen 14 angeordnet, der typischerweise fest mit der oberen Begrenzungswand, d.h. hier mit dem Deckel 12 verbunden ist.

Bei eingesetztem Staubsaugerfilterbeutel 7 taucht der Ansaugstutzen 14, nachdem der Deckel geschlossen wurde, in die Beutelfüllöffnung 10 des Staubsaugerfilterbeutels ein, so dass eingesaugte Luft durch den Deckel 12 hindurch und durch den Ansaugstutzen 14 in den Staubsaugerfilterbeutel 7 gesaugt wird.

Der Saugluftstrom wird durch eine Motorgebläseeinheit 15 erzeugt, die im Gebläseraum 5 angeordnet ist. Bei der Motorgebläseeinheit kann es sich insbesondere um ein Axialgebläse handeln.

Am Deckel 12 und somit an der oberen Begrenzungswand des Staubraums 4 ist ein Ansaugkanal 16 vorgesehen. Dieser Ansaugkanal 16 verbindet den Staubraum 4 fluidisch mit dem Gebläseraum 5. Mit anderen Worten strömt die von der Motorgebläseeinheit 15 angesaugte Luft, nachdem sie - wie mit den Pfeilen angedeutet - durch die Eintrittsöffnung 13 im Deckel 12 und den Anschlussstutzen 14 in den Staubsaugerfilterbeutel 7 eingetreten ist, durch den Ansaugkanal 16 in den Gebläseraum 5.

Die Trennwand 6 trennt den Staubraum 4 und den Gebläseraum 5 derart voneinander, dass es neben dem Ansaugkanal 16 keine weitere fluidische Verbindung zwischen dem Staubraum 4 und dem Gebläseraum 5 gibt. Auf diese Weise wird die durch die Motorgebläseeinheit 15 angesaugte Luft im Staubraum 4 und insbesondere im Staubsaugerfilterbeutel 7 nach oben in Richtung der oberen Begrenzungswand bzw. des Deckels 12 gesaugt und strömt dann durch den Ansaugkanal 16 in den Gebläseraum 5. Zwischen der oberen Begrenzungswand des Staubraums (speziell des Deckels 12) und der Trennwand 6 ist eine Öffnung gebildet 17, durch die der Ansaugkanal in den Gebläseraum 5 führt. Der Ansaugkanal 16 erstreckt sich somit entlang der oberen Begrenzungswand des Staubraums 4 durch die Öffnung 17 bis oberhalb des Gebläseraums 5, in den er von oben durch die Mündung 16' mündet. An der Mündung 16' ist ein Motorschutzfilter 22 angeordnet, der durch eine geeignete Halterung gehaltert wird.

Aufgrund dieser Konfiguration wird in den Staubsaugerfilterbeutel 7 eingesaugter Staub überwiegend an dem Bereich der Beutelwandung 9 abgeschieden, der zu dem Ansaugkanal 16 bzw. dessen Mündung im Staubraum 14 benachbart ist. Dieser Bereich der Beutelwandung 9 an der oberen Seite des eingesetzten Beutels angeordnet. Sobald die Motorgebläseeinheit 15 ausgeschaltet wird, fällt zumindest ein Teil des an der im Betrieb oben angeordneten Beutelwandung abgeschiedenen Staubes im Staubsaugerfilterbeutel 7 nach unten, sodass eine frühzeitige Verstopfung des Filtermaterials vermieden wird.

Der Ansaugkanal 16 ist entlang der oberen Begrenzungswand des Staubraums bzw. entlang des Deckels 12 ausgebildet bzw. führt daran entlang. Auf diese Weise wird auch der Luftstrom vom Staubraum 4 entlang der oberen Begrenzungswand bzw. des Deckels geführt, insbesondere in den Gebläseraum 5 geführt.

Der Staubraum wird durch eine der Trennwand 6 gegenüberliegende Stirnwand 18 begrenzt.

Wie dies auch in den nachfolgenden Figuren illustriert wird, weist die obere Begrenzungswand bzw. der Deckel 12 Beabstandungsmittel auf, um den Staubsaugerfilterbeutel 7 von der Begrenzungswand beabstandet zu halten. Diese Beabstandungsmittel begrenzen zumindest zum Teil den Ansaugkanal 16.

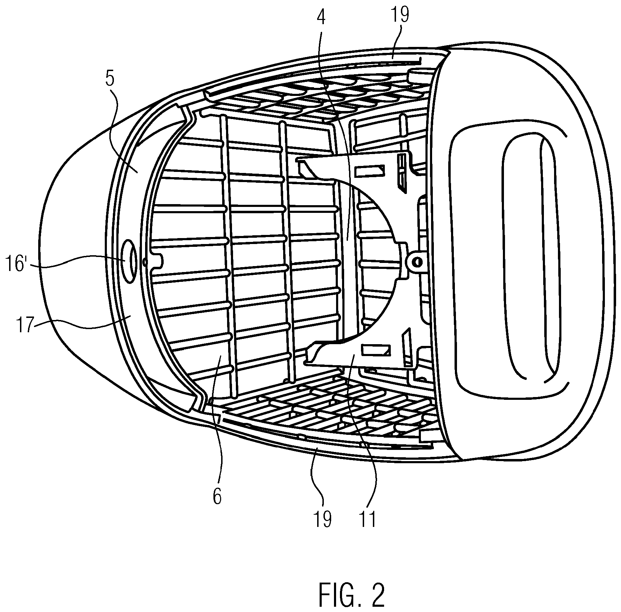

Figur 2 ist eine Innenansicht eines Bodenstaubsaugers, in der insbesondere der Staubraum 4 zu sehen ist. In dem Staubraum 4 ist die Halterung 11 für die Halteplatte des Staubsaugerfilterbeutels vorgesehen. Die Trennwand 6 trennt den Staubraum 4 von dem dahinter befindlichen Gebläseraum 5. Die obere Kante der Trennwand 6 bildet mitsamt dem in Figur 2 fehlenden Deckel 12 (also der oberen Begrenzungswand) eine Öffnung 17, durch die der Ansaugkanal vom Staubraum 4 in einen Bereich oberhalb des Gebläseraums 5 führt. Durch die Mündung 16' tritt ein entlang des Ansaugkanals geführter Luftstrom in den unterhalb der Mündung 16' angeordneten Gebläseraum ein.

Der Staubraum 4 wird quer zur Trennwand durch zwei einander gegenüberliegende Seitenwände 19 begrenzt, die jeweils an einer Seite an die Trennwand 6 angrenzen. An der jeweils anderen Seite grenzen sie an die Stirnwand 18 an.

Bei dem in Figur 2 illustrierten Beispiel sind an der Trennwand 6, den Seitenwänden 19 und auch am Boden des Staubraums 4 Beabstandungsmittel angeordnet, durch die ein im Staubraum 4 angeordneter Filterbeutel von den entsprechenden Wänden beabstandet gehalten wird.

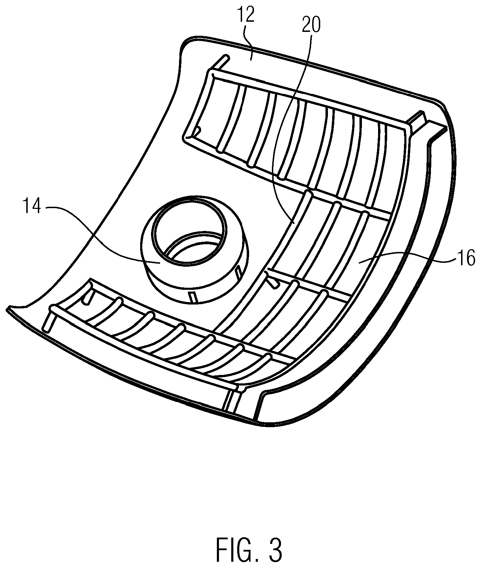

Figur 3 zeigt eine Draufsicht auf die Innenseite eines Deckels 12, der die obere Begrenzungswand eines Staubraums bildet. Am Deckel 12 ist der Anschlussstutzen 14 angeordnet, durch den Luft in den Staubraum strömen kann. Am Deckel 12 ist weiterhin ein Gitter 20 angeordnet, das ein Beabstandungsmittel bildet. Dieses Gitter 20 hält einen im Staubraum 4 angeordneten Staubsaugerfilterbeutel vom Deckel beabstandet, verhindert also, dass sich der Beutel bei eingeschalteter Motorgebläseeinheit an den Deckel anlegt.

Durch das Gitter 20 wird (zumindest teilweise) ein Ansaugkanal 16 definiert, der entlang des Deckels 12 in Richtung des Staubraums führt. Durch die Anordnung des Gitters 20 und des damit gebildeten Ansaugkanals sowie der zwischen der Trennwand 6 und dem Deckel 12 gebildeten Öffnung 17 wird sichergestellt, dass angesaugte Luft im Staubraum 4 nach oben in Richtung des Deckels 12 in die staubraumseitige Mündung des Ansaugkanals gesaugt wird und dann durch den Ansaugkanal entlang des Deckels 12 durch die Öffnung 17 geführt wird. Der Ansaugkanal erstreckt sich in einen Bereich oberhalb des Gebläseraums 5 und endet in einer Mündung 16', durch die die Luft in den Gebläseraum 5 und die dort vorgesehene Motorgebläseeinheit 15 eintritt. Insbesondere verhindert die Trennwand 6, in der ansonsten keine weitere Öffnung vorgesehen ist, dass Luft auf einem anderen, direkteren Weg vom Staubraum 4 in den Gebläseraum 5 gesaugt wird.

Statt einer zwischen der Trennwand 6 und dem Deckel 12 gebildeten Öffnung 17 kann alternativ die Trennwand 6 auch bis zum Deckel 12 (der oberen Begrenzungswand) durchgehend ausgeführt sein. In diesem Fall weist die Trennwand 6 dann in ihrem oberen Bereich eine Öffnung auf, durch die der Ansaugkanal vom Staubraum zum Gebläseraum führt. Eine derartige Öffnung in der Trennwand ist möglich, solange sichergestellt ist, dass der Ansaugkanal dergestalt ausgebildet ist, dass ein Ansaugen der Luft nach oben im Staubraum gewährleistet ist.

Bei dem in Figur 3 gezeigten Ausführungsbeispiel weist der gezeigte Teil des Ansaugkanals 16 einen umlaufend offenen Randbereich auf. Auf diese Weise wird bei einer Konfiguration des Staubraums, wie er in Figur 2 gezeigt ist, zusätzlich ein Ansaugen in Richtung der beiden Seitenwände 19 ermöglicht. In Richtung der Seitenwände angesaugte Luft wird entlang der Seitenwände 19 nach oben in Richtung der oberen Begrenzungswand und mittels des Ansaugkanals durch die Öffnung 17 in Richtung des Gebläseraums 5 geführt.

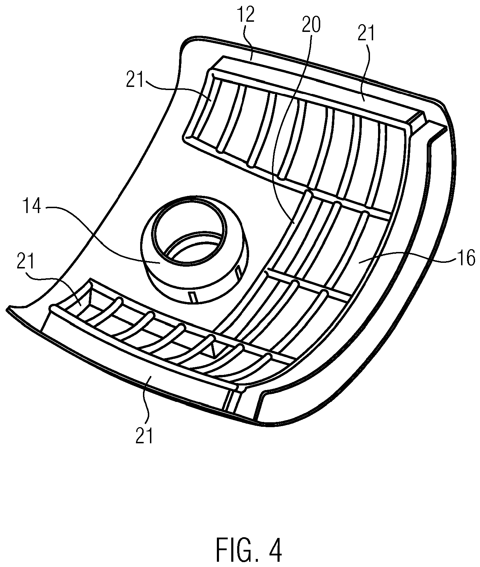

Ein alternatives Ausführungsbeispiel zeigt Figur 4. Die hier gezeigte Ansicht der Innenseite eines Deckels 12 mit einem Anschlussstutzen 14 weist ebenfalls ein Gitter 20 auf, durch das ein Mündungsbereich des Ansaugkanals 16 gebildet wird. Bei diesem Ausführungsbeispiel weist der gezeigte Teil des Ansaugkanals 16 allerdings einen umlaufend geschlossenen Randbereich auf. So ist der Ansaugkanal insbesondere in Richtung der beiden Seitenwände, in Richtung des Stutzens und in Richtung der Stirnwand mit einer Begrenzungswand 21 versehen, so dass der Ansaugkanal 16 lediglich in Richtung des Staubsaugerfilterbeutels bzw. in Richtung des Bodens des Staubraums durch seinen Mündungsbereich offen ist.

Auf diese Weise wird im Staubraum die Luft ausschließlich nach oben in den staubraumseitigen Mündungsbereich des Ansaugkanals 16 gesaugt; ein Ansaugen in Richtung einer der Seitenwände findet nicht statt. Auch bei dieser Konfiguration ergibt sich eine überraschend hohe Saugleistungskonstanz.

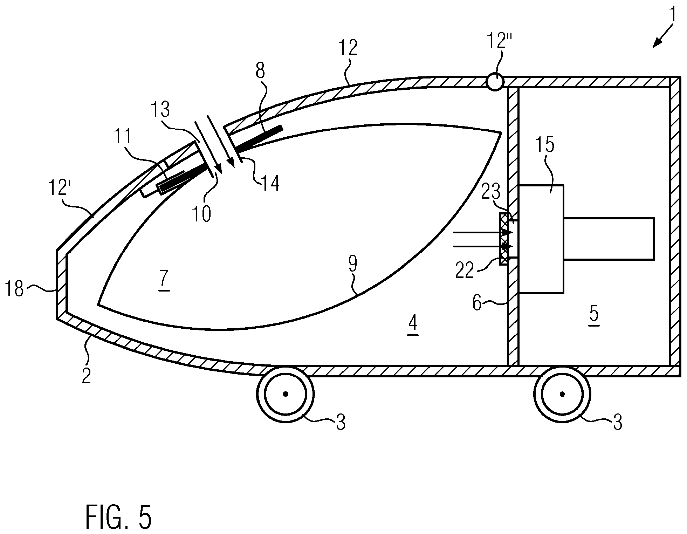

Figur 5 illustriert eine schematische Querschnittsansicht eines konventionellen Bodenstaubsaugers, der für eine Vergleichsuntersuchung verwendet wurde. Der Vergleichsstaubsauger weist einen herkömmlichen Aufbau auf, bei dem der Staubraum 4 durch eine Trennwand 6 vom Gebläseraum 5 getrennt ist. Bei der illustrierten Standard-Konfiguration ist in der Trennwand 6 eine Durchtrittsöffnung 23 vorgesehen, die eine direkte (und einzige) fluidische Verbindung zwischen Staubraum 4 und Gebläseraum 5 bildet; einen Ansaugkanal, wie in Figur 1, gibt es hingegen nicht.

Im Vergleich mit der erfindungsgemäßen Lösung gemäß Figur 1 ist in Figur 5 die Motorgebläseeinheit um 90° gedreht und saugt Luft durch die Durchtrittsöffnung 23 aus dem Staubraum 4 an. Vor der Durchtrittsöffnung ist ein Motorschutzfilter 22 angeordnet.

Vergleichshalber wurde die Saugleistungskonstanz mit einem erfindungsgemäßen Bodenstaubsauger (wie in Figur 1, 2 und 4 illustriert) und einem Standard-Bodenstaubsauger (wie in Figur 5 illustriert) gemessen. Dabei wurde bestimmt, wie groß die Abnahme des Volumenstroms beim Einsaugen von DMT-Staub (Typ 8) ist.

Die Luftdaten des Staubsaugers wurden jeweils gemäß DIN EN 60312-1:2014-01 bestimmt. Insbesondere wird auf Abschnitt 5.8 verwiesen. Dabei wird die Messeinrichtung in der Ausführung B gemäß Abschnitt 7.3.7.3 verwendet. Für gegebenenfalls notwendige Zwischenstücke zum Anschluss an die Messkammer gelten die Ausführungen in Abschnitt 7.3.7.1. Für den Begriff "Luftstrom" gemäß DIN EN 60312-1 werden auch die Begriffe "Volumenstrom" und "Saugluftstrom" verwendet.

In beiden Bodenstaubsaugern wurde eine Motorgebläseeinheit mit einer Aufnahmeleistung von 750 W verwendet. Die Abmessungen und Geometrie des Staubraums waren in beiden Fällen im Wesentlichen gleich. Allerdings wies der konventionelle Staubsauger keine gitterförmigen Beabstandungsmittel an Boden, Seiten, und Deckel auf; am Boden waren lediglich einige Rippen vorgesehen. Bei beiden Bodenstaubsaugern war an der Öffnung in den Gebläseraum 5 (also an der Mündung 16' bzw. der Durchtrittsöffnung 22) ein konventioneller Motorschutzfilter angeordnet. Es wurde in beiden Fällen der gleiche Original-OEM-Staubsaugerfilterbeutel des Standard-Bodenstaubsaugers verwendet.

Der Volumenstrom wurde mit eingesetztem aber leerem Beutel, nach dem Einsaugen von 200 g DMT-8-Staub und nach dem Einsaugen von 400 g DMT-8-Staub bestimmt. Die prozentuale Abnahme des Volumenstroms ist in der nachfolgenden Tabelle angegeben.

| | **Volumenstromabnahme nach 200 g DMT 8** | **Volumenstromabnahme nach 400 g DMT 8** |
|---|---|---|
| Erfindungsgemäßer Bodenstaubsauger, Deckel entsprechend Fig. 4 | 1,0 % | 4,4% |
| Konventioneller Bodenstaubsauger entsprechend Figur 5 | 4,2 % | 11,2 % |

Es ist unmittelbar ersichtlich, dass die erfindungsgemäße Konfiguration, bei der die Luft über einen entsprechend angeordneten Ansaugkanal 16 in den Gebläseraum gesaugt wird, zu einer signifikanten Verbesserung der Saugleistungskonstanz führt. Selbst nach dem Einsaugen von 400 g Staub liegt der Abfall des Volumenstroms in dem erfindungsgemäßen Fall noch bei unter 5%.

## Patentansprüche

1. Bodenstaubsauger (1) umfassend eine auf Rollen (3) und/oder Gleitkufen gelagerte Staubsammeleinrichtung (2) mit einer Motorgebläseeinheit,
wobei die Staubsammeleinrichtung ein Gehäuse aufweist, in dem ein Staubraum (4) zur Aufnahme eines Filterbeutels (7) und ein Gebläseraum (5) zur Aufnahme der Motorgebläseeinheit (15) vorgesehen sind,
wobei der Gebläseraum mit der Motorgebläseeinheit neben dem Staubraum angeordnet ist, wobei der Staubraum und der Gebläseraum durch eine Trennwand (6) voneinander getrennt sind,
wobei der Staubraum über einen Ansaugkanal (16) fluidisch mit dem Gebläseraum verbunden ist,
wobei der Ansaugkanal derart angeordnet ist, dass mittels der Motorgebläseeinheit Luft nach oben aus dem Staubraum durch den Ansaugkanal in den Gebläseraum saugbar ist,
wobei der Staubraum an seiner oberen Seite durch eine Begrenzungswand (12, 12') begrenzt ist und an der Begrenzungswand Beabstandungsmittel angeordnet sind, um einen im Staubraum angeordneten Filterbeutel von der Begrenzungswand im Betrieb des Bodenstaubsaugers beabstandet zu halten,
**dadurch gekennzeichnet, dass** die Beabstandungsmittel in Form von Rippen und/oder eines Gitters ausgebildet sind.

2. Bodenstaubsauger nach Anspruch 1, wobei in der Trennwand eine Öffnung vorgesehen ist, durch die der Ansaugkanal führt.

3. Bodenstaubsauger nach Anspruch 1, wobei der Staubraum an seiner oberen Seite durch eine Begrenzungswand verschlossen ist und zwischen der Begrenzungswand und der Trennwand eine Öffnung (17) gebildet ist, durch die der Ansaugkanal führt.

4. Bodenstaubsauger nach einem der vorangegangenen Ansprüche, wobei der Staubraum quer zur Trennwand durch einander gegenüberliegende Seitenwände begrenzt ist, wobei sich der Ansaugkanal zumindest teilweise entlang einer oder beider Seitenwände erstreckt.

5. Bodenstaubsauger nach einem der vorangegangenen Ansprüche, wobei der Staubraum durch eine der Trennwand gegenüberliegende Stirnwand (18) begrenzt ist, wobei sich der Ansaugkanal zumindest teilweise entlang der Stirnwand erstreckt.

6. Bodenstaubsauger nach einem der Ansprüche 1 - 5, wobei der Ansaugkanal derart angeordnet ist, dass mittels der Motorgebläseeinheit Luft ausschließlich nach oben aus dem Staubraum durch den Ansaugkanal in den Gebläseraum saugbar ist.

7. Bodenstaubsauger nach einem der vorangegangenen Ansprüche, wobei an einer oder beiden der Seitenwände, an der Trennwand und/oder der Stirnwand Beabstandungsmittel angeordnet sind, um einen im Staubraum angeordneten Filterbeutel von der entsprechenden Seitenwand, Trennwand bzw. Stirnwand beabstandet zu halten.

8. Bodenstaubsauger nach einem der vorangegangenen Ansprüche, wobei die Motorgebläseeinheit derart angeordnet ist, dass über den Ansaugkanal angesaugte Luft von oben in die Motorgebläseeinheit eintritt.

9. Bodenstaubsauger nach einem der vorangegangenen Ansprüche, wobei der Staubraum an seiner oberen Seite durch eine Begrenzungswand begrenzt ist, die zumindest teilweise als ein öffen- und verschließbarer, insbesondere verschwenkbarer, Deckel (12) ausgebildet ist.

10. Bodenstaubsauger nach einem der vorangegangenen Ansprüche, wobei der Staubraum
- an seiner oberen Seite durch eine Begrenzungswand begrenzt ist, in der eine Eintrittsöffnung für einen einzusaugenden Luftstrom vorgesehen ist, oder
- durch eine der Trennwand gegenüberliegende Stirnwand begrenzt ist, in der eine Eintrittsöffnung für einen einzusaugenden Luftstrom vorgesehen ist.

11. Bodenstaubsauger nach einem der vorangegangenen Ansprüche, umfassend einen Saugschlauch, ein Saugrohr und eine Bodendüse, wobei mittels der Motorgebläseeinheit Luft durch die Bodendüse, das Saugrohr und den Saugschlauch in den Staubraum saugbar ist.

12. Bodenstaubsauger nach einem der vorangegangenen Ansprüche, umfassend eine im Staubraum angeordnete Halterung zur Halterung eines Filterbeutels.

13. Bodenstaubsauger nach einem der vorangegangenen Ansprüche, umfassend einen an der gebläseraumseitigen Mündung (16') des Ansaugkanals angeordneten Motorschutzfilter (22).

## Claims

1. A floor vacuum cleaner (1) comprising a dust collecting device (2) supported on rollers (3) and/or skids and having a motor blower unit, the dust collecting device including a housing in which a dust compartment (4) for receiving a filter bag (7) and a blower compartment (5) for receiving the motor blower unit (15) are provided, wherein the blower compartment with the motor blower unit is arranged next to the dust space, wherein the dust compartment and the blower compartment are separated from each other by a separating wall (6), wherein the dust compartment is in fluid communication with the blower compartment via a suction channel (16), wherein the suction channel is arranged such that air can be sucked from the dust compartment through the suction channel upwards into the blower compartment by means of the motor blower unit, wherein the dust compartment is delimited on its upper side by a boundary wall (12, 12') and spacing means are arranged on the boundary wall in order to keep a filter bag arranged in the dust compartment spaced apart from the boundary wall during operation of the floor vacuum cleaner, **characterized in that** the spacing means are shaped as ribs and/or a grid.

2. The floor vacuum cleaner according to claim 1, wherein an opening is provided in the separating wall through which the intake duct passes.

3. The floor vacuum cleaner according to claim 1, wherein the dust compartment is closed at its upper side by a boundary wall and an opening (17) is formed between the boundary wall and the separating wall through which the suction duct leads.

4. The floor vacuum cleaner according to any one of the preceding claims, wherein the dust compartment is bounded transversely to the partition by side walls facing each other, the suction duct extending at least partially along one or both side wall/s.

5. The floor vacuum cleaner according to any one of the preceding claims, wherein the dust compartment is bounded by an end wall (18) opposite the separating wall, the suction duct extending at least partially along the end wall.

6. The floor vacuum cleaner according to any one of claims 1 - 5, wherein the suction duct is arranged such that air can be sucked by means of the motor blower unit from the dust compartment through the suction duct exclusively upwards into the blower compartment.

7. The floor vacuum cleaner according to any one of the preceding claims, wherein spacing means are arranged on one or both of the side walls, the separating wall and/or the end wall for spacing a filter bag arranged in the dust compartment from the corresponding side wall, partition wall or end wall.

8. The floor vacuum cleaner according to any one of the preceding claims, wherein the motor blower unit is arranged such that air drawn in via the intake duct enters the motor blower unit from above.

9. The floor vacuum cleaner according to any one of the preceding claims, wherein the dust compartment is delimited at its upper side by a boundary wall which is at least partially configured as an openable and closable, in particular pivotable, lid (12).

10. The floor vacuum cleaner according to any one of the preceding claims, wherein the dust compartment is delimited at its upper side by a boundary wall in which an inlet opening is provided for an air stream to be sucked in, or is defined by an end wall opposite the separating wall in which an inlet opening is provided for an air stream to be sucked in.

11. The floor vacuum cleaner according to any one of the preceding claims, comprising a suction hose, a suction tube and a floor nozzle, wherein by means of the motor blower air can be sucked into the dust compartment unit through the floor nozzle, the suction tube and the suction hose.

12. The floor vacuum cleaner according to any one of the preceding claims, comprising a holder disposed in the dust compartment for holding a filter bag.

13. The floor vacuum cleaner according to any one of the preceding claims, comprising a motor protection filter (22) arranged at the mouth (16') of the suction duct on the side of the blower compartment.

## Revendications

1. Aspirateur (1) comprenant un dispositif de collecte de poussière (2) monté sur des roulettes (3) et/ou des patins, avec un bloc formant soufflante motorisée,
dans lequel le dispositif de collecte de poussière présente un boîtier au sein duquel sont fournis un compartiment à poussière (4) permettant de recevoir un sac filtrant (7) et un compartiment pour soufflante (5) permettant d'accueillir le bloc formant soufflante motorisée (15),
dans lequel le compartiment pour soufflante est agencé avec le bloc formant soufflante motorisée à côté du compartiment à poussière, dans lequel le compartiment à poussière et le compartiment pour soufflante sont séparés l'un de l'autre par une paroi de séparation (6),
dans lequel le compartiment à poussière est relié de manière fluidique au compartiment pour soufflante par l'intermédiaire d'un conduit d'aspiration (16),
dans lequel le conduit d'aspiration est agencé de telle manière que de l'air peut être aspiré vers le haut dans le compartiment pour soufflante à partir du compartiment à poussière à travers le conduit d'aspiration au moyen du bloc formant soufflante motorisée,
dans lequel le compartiment à poussière est délimité au niveau de son côté supérieur par une paroi de délimitation (12, 12') et des moyens d'espacement sont agencés au niveau de la paroi de délimitation afin de maintenir un sac filtrant agencé dans le compartiment à poussière à une certaine distance de la paroi de délimitation lors du fonctionnement de l'aspirateur,
**caractérisé en ce que** les moyens d'espacement sont réalisés sous forme de nervures et/ou d'une grille.

2. Aspirateur selon la revendication 1, dans lequel un orifice à travers lequel passe le conduit d'aspiration est fourni dans la paroi de séparation.

3. Aspirateur selon la revendication 1, dans lequel le compartiment à poussière est fermé au niveau de son côté supérieur par une paroi de délimitation, et un orifice (17) à travers lequel passe le conduit d'aspiration est formé entre la paroi de délimitation et la paroi de séparation.

4. Aspirateur selon l'une quelconque des revendications précédentes, dans lequel le compartiment à poussière est délimité transversalement par rapport à la paroi de séparation par des parois latérales opposées, dans lequel le conduit d'aspiration s'étend au moins partiellement le long d'une paroi latérale ou des deux parois latérales.

5. Aspirateur selon l'une quelconque des revendications précédentes, dans lequel le compartiment à poussière est délimité par une paroi d'extrémité (18) opposée à la paroi de séparation, dans lequel le conduit d'aspiration s'étend au moins partiellement le long de la paroi d'extrémité.

6. Aspirateur selon l'une quelconque des revendications 1 à 5, dans lequel le conduit d'aspiration est agencé de telle manière que de l'air peut être aspiré dans le compartiment à ventilateur au moyen du bloc formant soufflante motorisée exclusivement vers le haut à partir du compartiment à poussière à travers le conduit d'aspiration.

7. Aspirateur selon l'une quelconque des revendications précédentes, dans lequel des moyens d'espacement sont agencés au niveau d'une paroi latérale ou des deux parois latérales, au niveau de la paroi de séparation et/ou de la paroi d'extrémité afin de maintenir un sac filtrant agencé dans le compartiment à poussière à une certaine distance de la paroi latérale, de la paroi de séparation ou de la paroi d'extrémité correspondante.

8. Aspirateur selon l'une quelconque des revendications précédentes, dans lequel le bloc formant soufflante motorisée est agencé de telle manière que de l'air aspiré par l'intermédiaire du conduit d'aspiration entre dans le bloc formant soufflante motorisée par le haut.

9. Aspirateur selon l'une quelconque des revendications précédentes, dans lequel le compartiment à poussière est délimité au niveau de son côté supérieur par une paroi de délimitation qui est réalisée au moins partiellement sous la forme d'un couvercle (12) pouvant être ouvert et fermé, en particulier pivotant.

10. Aspirateur selon l'une quelconque des revendications précédentes, dans lequel le compartiment à poussière
- est délimité au niveau de son côté supérieur par une paroi de délimitation au sein de laquelle est fourni un orifice d'entrée pour un flux d'air à aspirer, ou
- est délimité par une paroi d'extrémité, opposée à la paroi de séparation, au sein de laquelle est fourni un orifice d'entrée pour un flux d'air à aspirer.

11. Aspirateur selon l'une quelconque des revendications précédentes, comprenant un flexible d'aspiration, un tube d'aspiration et un suceur, dans lequel de l'air peut être aspiré dans le compartiment à poussière à travers le suceur, le tube d'aspiration et le flexible d'aspiration au moyen du bloc formant soufflante motorisée.

12. Aspirateur selon l'une quelconque des revendications précédentes, comprenant un support qui est agencé dans le compartiment à poussière et permet de supporter un sac filtrant.

13. Aspirateur selon l'une quelconque des revendications précédentes, comprenant un filtre de protection de moteur (22) agencé au niveau de l'embouchure (16'), située du côté du compartiment pour soufflante, du conduit d'aspiration.
